# EUROPÄISCHE PATENTANMELDUNG

(11) **EP 1 081 104 A1**
(43) Veröffentlichungstag der Anmeldung: **07.03.2001**
(21) Anmeldenummer: 00114803.0
(22) Anmeldetag: 11.07.2000
(51) Int. Cl.: C03B 11/06, C03B 11/10

(54) **Bildschirm und Vorrichtungen zu seiner Herstellung**

(30) Priorität: 01.09.1999 DE 19941572
(71) Anmelder: Schott Glas, 55122 Mainz (DE); CARL-ZEISS-STIFTUNG trading as Schott Glas, 55122 Mainz (DE)
(72) Erfinder: Biedendorf, Ralf, 55411 Bingen (DE)
(74) Vertreter: Fuchs Mehler Weiss & Fritzsche

(57) **Zusammenfassung**

Bildschirm und Vorrichtung zu seiner Herstellung Bildschirme bestehen aus einer Frontscheibe und einem umlaufenden Steg. Üblicherweise wird nach Fertigstellung der Bildröhre auf den Steg ein Metallrahmen als Implosionsschutz aufgeschoben. Konventionelles Preßwerkzeug zur Herstellung von Bildschirmen ist derart ausgebildet, daß auf der Fläche des Bildschirmsteges, auf die der Implosionsschutzrahmen aufgeschoben wird, eine Formnaht ausgebildet ist. Beim Aufschieben des Implosionsschutzrahmens kann er an der Formnaht hängenbleiben und Risse induzieren. Dies erhöht die Implosionsgefahr und mindert die thermische Belastbarkeit, was den Ausschuß erhöht.

Die oben genannten Nachteile werden durch einen Bildschirm (1) vermieden, der eine Formnaht (4) auf der der Frontscheibe (2) abgewandten Seite der Fläche (5), auf die der Implosionsschutzrahmen aufgeschoben wird, aufweist. Hergestellt wird der Bildschirm (1) durch ein Preßwerkzeug aus einem Preßstempel, einem Halsring und einem Formunterteil, wobei der Halsring nur das der Frontscheibe (2) abgewandte Ende des Steges (3) formt, während der übrige Stegbereich und die Frontscheibe (2) vom Formunterteil geformt werden.

Ausschußverringerung bei Bildröhrenproduktionen

## Beschreibung

Die Erfindung bezieht sich auf einen Bildschirm, der eine Frontscheibe, einen umlaufenden Steg, dessen Außenfläche in einem umlaufend ringförmigen Bereich, im folgenden KC-Fläche genannt, im wesentlichen parallel zur Achse ist, die senkrecht zur Oberfläche durch den Mittelpunkt der Frontscheibe verläuft, und eine außen auf dem Steg umlaufende Formnaht aufweist. Ein derartiger Bildschirm geht aus der DE 198 23 710 A1 hervor.

Die Erfindung bezieht sich auch auf zwei Vorrichtungen zum Pressen eines derartigen Bildschirms aus einem Glasposten mit einem Preßwerkzeug, die einen Preßstempel, ein Formunterteil und einen darauf außen bündig aufsitzenden Halsring aufweisen, wie sie aus der genannten DE 198 23 710 A1 bekannt sind.

Bildschirme werden zur Herstellung von Kathodenstrahlröhren benötigt, die beispielsweise in Fernsehern oder Monitoren verwendet werden. Die Hauptbestandteile einer Bildröhre sind der Bildschirm, der Trichter, im Falle einer Farbbildröhre eine Schlitzmaske, eine Elektronenkanone, eine Ablenkeinheit für die Elektronenstrahlen und ein Implosionsschutzrahmen.

Im Verlaufe des Herstellungsprozesses einer Bildröhre wird auf die Kontaktfläche des Trichters zum Schirm, die Lötfläche, ein Glaslot aufgebracht. Zur Verbindung des Trichters mit dem Bildschirm, die beide aus Glas bestehen, wird der Trichter mit dem Hals nach unten in ein Gestell eingelegt und der Schirm mit seiner am umlaufenden Steg ausgebildeten Lötfläche daraufgesetzt. Danach werden die beiden Teile durch einen Tunnelofen transportiert, in dem das Glaslot schmelzflüssig wird. Durch das Eigengewicht des Schirms wird das Glaslot gleichmäßig zwischen den Lötflächen verteilt. Nach dem Abkühlen sind Schirm und Trichter fest miteinander verbunden. Anschließend wird das Elektronenstrahlsystem in den Trichterhals eingeschmolzen.

Kathodenstrahlröhren müssen im Hochvakuum betrieben werden. Um dieses Hochvakuum zu erzeugen, werden die Bildröhren in einem weiteren Tunnelofen auf 350°C aufgeheizt und dabei über den noch offenen Trichterhals luftleer gepumpt. Am Ende dieses Vorganges, der etwa 2 1/2 Stunden dauert, wird der Trichterhals zugeschmolzen. Durch das Evakuieren wird der Bildschirm durch den Umgebungsdruck stark belastet. Durch den Druck verformt sich der Schirm um einige zehntel Millimeter. Um den Schirm zu stabilisieren und somit die Bildröhre wirksam vor Implosionen zu schützen, wird außen auf dem Schirmsteg ein Stahlrahmen aufgeschrumpft. Dazu wird der Rahmen induktiv auf 450°C aufgeheizt und die Bildröhre mit dem Schirm voran in den Rahmen eingeschoben. Als letztes wird auf dem Trichterhals die Ablenkeinheit aufgesetzt.

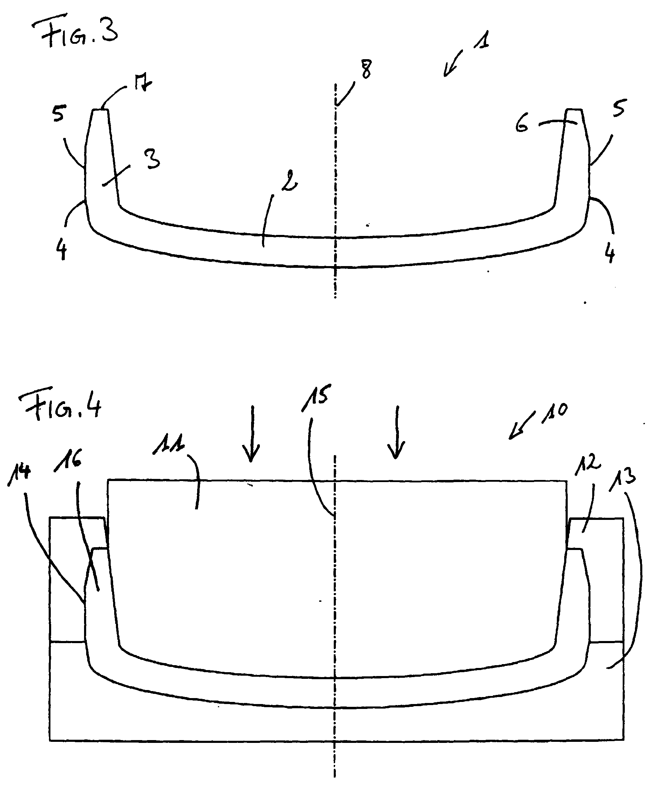

Bildschirme werden aus Glas gepreßt. Der Preßvorgang ist in Figur 4 dargestellt, die ein konventionelles Preßwerkzeug 10 zeigt. Das Preßwerkzeug 10 besteht aus einem Preßstempel 11, einem Formunterteil 13 sowie einem Halsring 12. Ein Glastropfen 16 fällt in die aus Halsring 12 und Formunterteil 13 gebildete Form und wird durch Pressen mit dem Preßstempel 11 in die gewünschte Form gebracht. Die umlaufende Fläche, auf die beim fertigen Bildschirm der Implosionsschutzrahmen aufgeschoben wird (auch KC-Fläche genannt), wird von der Innenfläche 14 des Halsrings 12 geformt.

An der Stelle, an der Formunterteil 13 und Halsring 12 aneinanderstoßen, schließen die beiden Teile nicht ideal bündig ab. Bei dem gepreßten Bildschirm äußert sich dies darin, daß an der betreffenden Stelle eine Formnaht ausgebildet ist. Diese Formnaht kann als Versatz, wobei entweder der obere Teil oder der untere Teil vorsteht, ausgebildet sein oder als Überpressung, d.h. einen umlaufenden Wulst.

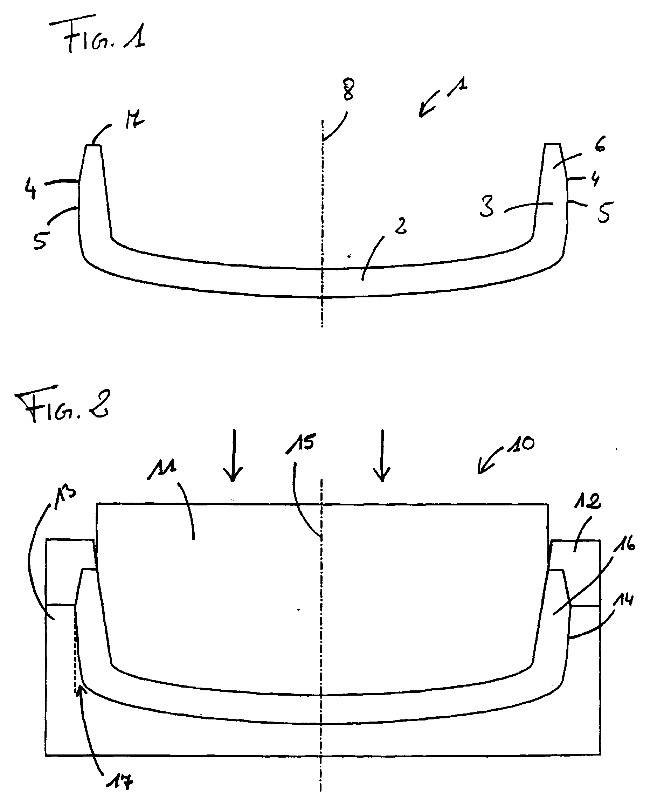

Ein herkömmlicher Bildschirm ist in Figur 3 dargestellt. Der Bildschirm 1 besteht aus einer Frontscheibe 2 sowie einem umlaufenden Steg 3, auf dem eine KC-Fläche 5 ausgebildet ist, die parallel zur Mittelachse 8 der Frontscheibe 2 ist. Bezüglich der Parallelität können die Toleranzen bis zu 2° bis 3° betragen. Im in Figur 3 dargestellten Beispiel befindet sich die Formnaht 4 unterhalb der KC-Fläche 5. Oberhalb der KC-Fläche 5 verjüngt sich der Steg 3, 6 und endet in einer Lötkante 7.

Die KC-Fläche 5 ist die Fläche des Bildschirmes 1, auf die der eingangs erwähnte Stahlrahmen, der Implosionsschutzrahmen, aufgeschoben wird. Da dieser von der Frontscheibe her auf den Bildschirm aufgeschoben werden muß, kann es passieren, daß er an der Formnaht hängen bleibt und Risse induziert. Oder der Stahlrahmen wird so aufgeschoben, daß er im montierten Zustand auf die Formnaht drückt und diese beschädigt. Diese Risse und Beschädigungen erhöhen die Implosionsgefahr. Außerdem hält der Bildschirm den thermischen Belastungen während der weiteren Herstellungsschritte nicht gut stand. Es kommt also zu erhöhtem Ausschuß.

Aufgabe der vorliegenden Erfindung ist es, einen Bildschirm bzw. eine Vorrichtung zu dessen Herstellung bereitzustellen, der einen geringeren Ausschuß bei der Bildröhrenproduktion gewährleistet.

Gelöst wird diese Aufgabe durch einen Bildschirm nach Anspruch 1 sowie durch eine Vorrichtung nach Anspruch 4 und eine Vorrichtung nach Anspruch 7.

Dadurch, daß die Formnaht auf der der Frontscheibe abgewandten Seite der KC-Fläche ausgebildet ist, ist es nun möglich, den Implosionsschutzrahmen aufzuschieben, ohne den Bildschirm zu beschädigen. Auch das Induzieren von Rissen und Beschädigungen wird vermieden, so daß der Ausschuß insgesamt verringert wird. Dadurch können die Herstellungskosten gesenkt werden. Für den Endverbraucher bietet dieser Bildschirm den Vorteil, daß die Implosionsgefahr dieser Bildröhre geringer ist als bei herkömmlichen Bildröhren. Die Formnaht kann dabei unmittelbar im Anschluß an die KC-Fläche ausgebildet sein oder sich in einigem Abstand von der KC-Fläche befinden.

Zwei bevorzugte Ausführungsformen des erfindungsgemäßen Bildschirmes sollen explizit erwähnt werden: Für den Fall, daß der Bildschirm deutlich gewölbt ist, hat es sich als vorteilhaft erwiesen, wenn der Steg sich oberhalb der KC-Fläche verjüngt. Bei flachen Bildschirmen werden die Spannungen, die von dem Außendruck verursacht werden, besser aufgefangen, wenn der Steg sich oberhalb der KC-Fläche verbreitert. Die Grenze zwischen flachen und gewölbten Bildschirmen kann man bei Krümmungsradien von etwa 10 m ziehen.

Die erfindungsgemäße Vorrichtung zeichnet sich dadurch aus, daß das Formunterteil und der Halsring derart ausgebildet sind, daß die KC-Fläche des Bildschirms einzig und allein von dem Formunterteil geformt wird, während der Halsring ausschließlich den Stegbereich auf der der Frontscheibe abgewandten Seite der KC-Fläche ausbildet. Dadurch bildet sich beim Bildschirm die Formnaht immer auf der der Frontscheibe abgewandten Seite der KC-Fläche und kommt nicht mehr mit dem Implosionsschutzrahmen in Berührung. Die angesprochenen Bereiche der Werkzeuginnenflächen erstrecken sich über mehrere Millimeter bis Zentimeter. An der Stelle, an der das Formunterteil und der Halsring unmittelbar aufeinandertreffen, schließen die Innenflächen der beiden Werkzeuge bündig ab.

In einer weiteren Ausprägung der erfindungsgemäßen Vorrichtung wird auch ein Teil des erwähnten Stegbereiches von dem Formunterteil geformt. Der andere Teil dieses Stegbereiches wird vom Halsring geformt.

Je nachdem, ob der Bildschirmsteg sich anschließend an die KC-Fläche verjüngen oder verbreitern soll, ist entweder der von dem Halsring geformte Innenhohlraum tiefer als der von dem Formunterteil geformte Innenhohlraum oder umgekehrt. Wird ein Teil dieses Bildschirmtyps vom Formunterteil geformt, gilt dies analog für die unterschiedlichen Formunterteilinnenhohlräume.

In einer bevorzugten Ausführungsform ist die die KC-Fläche formende Innenfläche des Formunterteils leicht von der Längsachse des Preßstempels weggeneigt. Beim Abkühlen verzieht sich das Glas derart, daß die KC-Fläche danach vergleichsweise genau parallel zur Längsachse des Preßstempels ist und sich daher der Implosionsschutzrahmen leichter aufschieben und befestigten läßt.

Ausführungsbeispiele der Erfindung sollen anhand der folgenden Figuren näher erläutert werden. Dabei ist zu beachten, daß es sich nur um Prinzipskizzen handelt, die nicht maßstabsgetreu sind.

Dargestellt sind in
- Figur 1: ein Schnitt durch einen Bildschirm und in
- Figur 2: ein Schnitt durch das Preßwerkzeug.

Der in Figur 1 dargestellte Bildschirm 1 besteht im wesentlichen aus einer Frontscheibe 2 und einem umlaufenden Steg 3. Der Steg 3 weist eine KC-Fläche 5 auf. Dabei ist unter der KC-Fläche ein umlaufend ringförmiger Bereich der Außenfläche des Steges 3 zu verstehen, der im wesentlichen parallel zu der Achse 8 verläuft, die senkrecht zur Oberfläche durch den Mittelpunkt der Frontscheibe 2 verläuft. Auf diese KC-Fläche 5 kann ein Implosionsschutzrahmen aufgeschoben werden. Zu der der Frontscheibe 2 abgewandten Seite hin schließt sich an die KC-Fläche 5 ein sich verjüngender Stegbereich 6 an. Zwischen der KC-Fläche 5 und dem sich verjüngenden Bereich 6 ist eine Formnaht 4 ausgebildet. Der sich verjüngende Teil 6 des Steges 3 mündet in eine umlaufende Lötkante 7, auf die Glaslot aufgebracht werden wird, um den Bildschirm 1 mit dem Trichter zu verbinden.

In Figur 2 ist das Preßwerkzeug 10 dargestellt, das aus einem Preßstempel 11, einem Halsring 12 sowie einem Formunterteil 13 besteht. Die eigentliche Form, in die der Glastropfen 16 fällt, wird durch den Halsring 12 und das Formunterteil 13 gebildet. Der Glastropfen 16 wird von dem Preßstempel 11, der in Pfeilrichtung in die aus Formunterteil 13 und Halsring 12 gebildete Form eingeführt wird, derart ausgepreßt, daß er die Bildschirmform annimmt.

Das Formunterteil 13 ist derart ausgebildet, daß dessen Innenfläche einen Ringbereich 14 aufweist, der im wesentlichen parallel zur Längsachse 15 des Preßstempels 11 ist. Dieser Bereich 14 befindet sich im an den Halsring 12 anschließenden Bereich des Formunterteils 13 und dient dazu, die KC-Fläche 5 des Bildschirmes 1 auszuformen.

Der Innenflächenbereich 14 ist um einen Öffnungswinkel 17 von 1° von der Längsachse 15 des Preßstempels 11 weggeneigt. Da sich der Bildschirm 1 beim Abkühlen etwas verzieht, erhält man auf diesem Weg eine KC-Fläche 5, die mit größerer Genauigkeit parallel zur Mittelachse 8 ist. Dadurch läßt sich der Implosionsschutzrahmen einfacher aufziehen und befestigen.

Der Halsring 12 ist derart ausgebildet, daß er den sich verjüngenden Bereich 6 des Bildschirmsteges 3 des Bildschirmes 1 sowie die umlaufende Kante 7 ausformt.

Der Halsring 12 und das Formunterteil 13 liegen nicht ideal bündig aufeinander auf, so daß sich an ihrem Übergang ein kleiner Schlitz bildet, in dem ebenfalls Glas hineingepreßt wird, was sich in dem Entstehen einer Formnaht 4 äußert. Diese Formnaht 4 wird sich beim fertigen Bildschirm 1 an dem Übergang zwischen der KC-Fläche 5 und dem sich verjüngenden Bereich 6 des Bildschirmsteges 3 befinden.

Nicht dargestellt ist die Werkzeugvariante, bei der das Formunterteil 13 nicht nur die KC-Fläche 5 formt, sondern auch einen Teil des sich daran anschließenden Stegbereichs 6.

## Patentansprüche

1. Bildschirm, der eine Frontscheibe (2), einen umlaufenden Steg (3), dessen Außenfläche in einem umlaufend ringförmigen Bereich, im folgenden KC-Fläche (5) genannt, im wesentlichen parallel zur Achse (8) ist, die senkrecht zur Oberfläche durch den Mittelpunkt der Frontscheibe (2) verläuft, und eine außen auf dem Steg umlaufende Formnaht (4) aufweist und **dadurch gekennzeichnet** ist, daß die Formnaht (4) auf der der Frontscheibe (2) abgewandten Seite der KC-Fläche (5) ausgebildet ist.

2. Bildschirm nach Anspruch 1, **dadurch gekennzeichnet,** daß der Steg (3) sich oberhalb der KC-Fläche (5) verjüngt.

3. Bildschirm nach Anspruch 1, **dadurch gekennzeichnet,** daß der Steg (3) sich oberhalb der KC-Fläche (5) verbreitert.

4. Vorrichtung zum Pressen von Bildschirmen nach Anspruch 1 aus einem Glasposten mit einem Preßwerkzeug (10), das einen Preßstempel (11), ein Formunterteil (13) und einen darauf aufsitzenden Halsring (12) aufweist und **dadurch gekennzeichnet** ist, daß die Innenfläche des Formunterteils (13) im an den Halsring anschließenden Ringbereich (14) im wesentlichen parallel zur Längsachse (15) des Preßstempels (11) ausgebildet ist und daß der Abstand zweier gegenüberliegender Punkte auf der Innenfläche des Formunterteils (13) im an den Halsring (12) anschließenden Bereich ungleich dem Abstand zweier gegenüberliegender Punkte auf der Innenfläche des Halsringes (12) im an das Formunterteil (13) anschließenden Bereich ist.

5. Vorrichtung nach Anspruch 4, **dadurch gekennzeichnet,** daß der Abstand zweier gegenüberliegender Punkte auf der Innenfläche des Formunterteils (13) im an den Halsring (12) anschließenden Bereich größer ist als der Abstand zweier gegenüberliegender Punkte auf der Innenfläche des Halsringes (12) im an das Formunterteil (13) anschließenden Bereich.

6. Vorrichtung nach Anspruch 4, **dadurch gekennzeichnet,** daß der Abstand zweier gegenüberliegender Punkte auf der Innenfläche des Formunterteils (13) im an den Halsring (12) anschließenden Bereich kleiner ist als der Abstand zweier gegenüberliegender Punkte auf der Innenfläche des Halsringes (12) im an das Formunterteil (13) anschließenden Bereich.

7. Vorrichtung zum Pressen von Bildschirmen nach Anspruch 1 aus einem Glasposten mit einem Preßwerkzeug (10), das einen Preßstempel (11), ein Formunterteil (13) und einen darauf aufsitzenden Halsring (12) aufweist und **dadurch gekennzeichnet** ist, daß die Innenfläche des Formunterteils (13) im von dem Halsring (12) beabstandeten Ringbereich im wesentlichen parallel zur Längsachse (15) des Preßstempels (11) ausgebildet ist.

8. Vorrichtung nach Anspruch 7, **dadurch gekennzeichnet,** daß der Abstand zweier gegenüberliegender Punkte auf der Innenfläche des Formunterteils (13) im an den Halsbereich (12) anschließenden Bereich größer als im davon beabstandeten, im wesentlichen parallel zur Längsachse (15) des Preßstempels (11) ausgebildeten Bereich ist.

9. Vorrichtung nach Anspruch 7, **dadurch gekennzeichnet,** daß der Abstand zweier gegenüberliegender Punkte auf der Innenfläche des Formunterteils (13) im an den Halsbereich (12) anschließenden Bereich kleiner als im davon beabstandeten, im wesentlichen parallel zur Längsachse (15) des Preßstempels (11) ausgebildeten Bereich ist.

10. Vorrichtung nach einem der Ansprüche 4 bis 9, **dadurch gekennzeichnet,** daß die Innenflächen des Formunterteils (13) im an dem Halsring (12) anschließenden Bereich (14) um 0,5° bis 2° von der Längsachse (15) des Preßstempels (11) weggeneigt ist.
